# EUROPEAN PATENT APPLICATION

(11) **EP 2 511 168 A1**
(43) Date of publication of application: **17.10.2012**
(21) Application number: 10835521.5
(22) Date of filing: 10.12.2010
(51) Int. Cl.: B63B 1/10, B63B 1/40, B63B 1/38

(54) **VESSEL WITH SUBMERSIBLE HULLS**

(30) Priority: 11.12.2009 ES 200902316
(71) Applicant: Grupo De Ingenieria Oceanica, S.L., Tenerife, Islas Canarias (ES)
(72) Inventor: DEL CAMPO Y RUIZ DE ALMODOVAR, Cesar, 11500 El Puerto de Santa Maria (Cádiz) (ES)
(74) Representative: Garcia-Cabrerizo y del Santo, Pedro Maria
(86) International application number: PCT/ES2010/000509
(87) International publication number: WO 2011/070198

(57) **Abstract**

New design of vessel with submersible hulls which can transport large cargos at high speed sailing above the waves and which is made up of two parallel submerged bodies (4), clearly cylindrical in cross-section or as hydrodynamic as possible, joined by hydrodynamic profiles (5).

Four hydrodynamic legs (3) are located in the confluence between the cylinders (4) and the profiles (5) capable of supporting a platform or loading zone (2) which can move (up or down) on the legs (3) which have a system of vertical displacement so as to raise itself above the level of the waves.

The parallel bodies of submerged displacement (4) joined to the hydro-dynamic profiles (5) can be completely covered with a textile of permeable sheets of porosity less than the size of a molecule of water and greater than that of a molecule of air and air can be pumped into the interior. The air molecules escape via the pores breaking the outer layer and separating the water molecules from the submerged area so as to reduce viscous friction to a significant degree.

The lower works can be raised to the level of the sea to load and material in their interior or to enter shallow water ports.

## Description

This invention comes within the technical sector of navigation and design of vessels for the carrying out of any type of maritime operation of loading, transport of goods and persons, in commercial usages of large- and small-scale ports, fishing, sport, and in any sea conditions. More specifically it falls within the sector of design of vessels specially conceived for supplying, the installation, operation and maintenance of sea production platforms.

### Background to the invention

There is currently a growing need to use the natural resources of the sea to supply the needs of the population. It is for that reason that a great number of marine platforms or structures are being developed, either floating or fixed, for the production and / or extraction of resources.

For the supply of materials and equipment for their manufacture, the installation, operation, maintenance and supplying of the same during production it is necessary to have the appropriate vessels available.

For that reason a study was carried out to find a vessel in the current state of the art which complied with the requirements set out below, all of them necessary for the carrying out of these functions:
- Vessel for multi-purpose transport. The vessel must transport different types of cargo, from bulk cargos such as cement and dry goods for the production of cement and other construction materials, to rods for aero-generators of support in aquiculture operations. These rods can be up to 60 m in length and there must therefore be accessible deck-space of this length.
- Maximum weight of cargo transported of 3500 TPM. The limit is laid down particularly for bulk cargos and is without doubt what will determine the general size of the vessel.
- It must have sufficient fuel capacity to operate for a reasonable time, such as a week on short trips, or at least for a return journey on longer trips (max. autonomy 2500 miles).
- Speed approx. 25 knots or more. The aim is for the time necessary both for supply and maintenance operations to be minimal or at least not such as to make responding to an emergency impossible.
- Navigation in 8 m significant height.

These requirements envisage a type of heavy cargo transport at a relatively high speed and which can also be maintained in relatively rough seas. All of them are variable depending on the specific application and location in which the vessel is to operate, and are set down as an average for the carrying out of the study.

The conventional solution for a support vessel for off-shore platforms is the type of vessel known as a supply vessel, which is a type of tug with a certain bollard pull, sometimes even with dynamic positioning and with a very wide deck to transport different types of supplies, palleted or not; it is also normally equipped with means of support for operations, such as cranes, machinery for moving of anchors, etc.

A vessel of this type can be made of a size to comply with the operational requirements laid down, although behaviour at sea with such high waves would without any doubt cause high degrees of movement and acceleration for any conventional mono-hull vessel.

Vessels of this type require more than 40,000 kW of power for a speed of 25 knots.

Given the size of the vessel and the speed required mono-hull vessels are strongly limited by the optimisation of resistance to advance, especially that due to the formation of waves.

Thus the conclusion is reached that to meet the requirement of high speeds in vessels transporting non-light dead weights there are two possibilities:
1.- Raise the hull out of the water by dynamic support, by the use of submersible wings. This solution is not advisable from a certain size, as the support of the wings increases with size as a function of the square of the overall length (area of the wings) while weight grows with size as a function of the cube of the overall length (volume of displacement) and hence it is difficult to extrapolate to higher sizes a design of hydrowing vessel which has worked well in smaller sizes.
2.- Submerge the displacement in such a way that floating is as smooth as possible, as this is the main (although not the only) cause of resistance due to wave formation.

This second possibility has been explored for at least 20 years with a variety of prototypes which have generally not gone into mass production.

However the most promising option for meeting the requirements is a mixed vessel with dynamic suspension support from submerged wings or fins.

This is a SWATH type solution.

The acronym SWATH means Small Waterplane Area Twinhull, i.e. a twin-hull vessel (catamaran) with a small area of flotation. This is achieved by thinning each hull in the flotation zone, while the main displacement volume of the vessel is taken down.

The advantage of this type is to reduce the resistance from wave formation and therefore the power necessary to propel the vessel at relatively high speeds. On the other hand this type of vessel has in general, for the same displacement and even for the same dead weight (which is the best means of comparison), a greater wet surface, which leads to higher readings for friction resistance or viscous resistance in general. It may be said that in the comparison between the mono-hull concept and the SWATH there is usually a commitment speed above which the SWATH type is better.

In this type of vessel around 28,000 kW would be necessary for a speed of 25 knots.

But the greater problem of this type, for the objectives pursued, is that its upper works cannot be lifted above the height of the waves, and hence although it is true that due to its geometry it has little resistance from wave formation, it cannot avoid the resistance of waves formed in the sea and the difficulties and risks of navigation with sea made up of large waves, and hence in these circumstances it could not perform O&M operations for production platforms.

In calm conditions it would have difficulty working with platforms as remaining afloat it would be affected by variations of the level of the sea however small and would also require means for access of personnel and equipment to the level of the platform and from this to the vessel.

For all of these reasons this invention develops a vessel which, based on certain concepts already in existence in the state of the art, evolves from these and introduces new features in such a way as to obtain results which meet the requirements set out.

### Description of the invention

The new design of vessel forming the subject-matter of this invention is characterised by having its displacement made up of two parallel submerged bodies, clearly cylindrical in cross-section or as hydrodynamic as possible, joined by hydrodynamic profiles.

Four hydrodynamic legs are located in the confluence between the cylinders and the profiles capable of supporting a platform or loading zone which can move (up or down) on the legs to raise itself above the level of the waves.

Within the legs there are hydraulic pistons of equal length and which cross the cylinders and are joined to tangential plates outside the cylinders for deep support of the pistons.

The upper works (or non-submerged part of the vessel) has pinions which can move it above the legs which are fitted with a rack to the level necessary to navigate at sea level. The rack and pinion system can be replaced by any equivalent system of vertical displacement.

The engine room, motors, the bridge and the crew area are located above the upper works. The geometry of the upper works will be adapted to each particular case.

Various types of propulsion can be adapted to this vessel, but the complex reverse tractor type is preferred which avoids having to use the rudder.

The vessel sailing in this way does not form waves and does not have to overcome the resistance of the formation of waves, which is the greatest limitation on speed and the one which consumes most power.

The following factor would be viscous resistance or water friction. This can be reduced by coverings with low water friction coefficients or completely covering the submerged area with a textile of permeable sheets of porosity less than the size of a molecule of water and greater than that of a molecule of air.

Once covered, air is pumped into the interior. The air molecules injected escape via the pores; as they escape the outer layer separating the water molecules from the submerged area is broken and the viscous or water friction is reduced to a significant degree.

The pressure with which the air escapes has to be greater than the hydrostatic pressure on the water on top, which will depend on the depth of the cylinders. Once the vessel picks up speed, with the Venturi effect, the speed of the vessel will itself force more air to escape.

If reverse tractor propulsion is used, deep elevators are used, whereas if classic propulsion is used the rudder/s (there are two hulls) would also be put in the usual direction.

One of the many advantages which this vessel offers is that on arrival at a wharf for unloading it can dock at the level of the wharf, i.e. the loading platform is put at the level of the wharf in such a way that, for wheeled cargos, neither a ramp nor a crane is necessary to take them from the hold, saving a great deal of loading and unloading time. In the same way the cargo can be placed at the same level as that of a production platform at sea making operations considerably easier.

The upper works can also be put at the level of the wharf (as the legs contain telescopic cylinders which can be retracted if desired) the parallel submerged bodies of which make it possible to move bulk cargoes extracted by pump (cement, sand, young fish, fish food) and to load good into the vessel pumping the material directly from the factory to the cylinders without it being necessary to shovel the goods into containers and for these containers then to be loaded into the hold.

The upper works are raised to enter shallow ports, losing ballast, up to the surface and then lowered to the level of the sea and floated on, reducing the draft of the vessel.

Until it picks up sufficient speed the vessel. has no means of support. Once it has support the vessel lowers its upper works and positions itself beneath the waves, and the upper works is then raised and positioned above the waves increasing speed.

In view of the problems referred to in the previous section, the solution which has been developed and protection for which is sought presents the following advantages as regards the existing state of the art:
● Possibility of transporting large cargos at high speed
● Possibility of transporting bulk cargos in the vessel itself, without requiring additional deposits
● No wave formation and drastic reduction of viscosity friction coefficient
● Low consumption and high speed
● Real possibility of operating with safety in practically any weather conditions
● Maximum efficiency in sea production platforms operations and maintenance, as by resting its legs on the sea bed it can position its working deck at the level of the platform, creating a form and stable area which allows the direct passing of personnel and equipment
● In tasks of supplying of materials and equipment for the manufacture of production platforms its singular feature which allows it to position its loading areas at the same level as the wharf makes it possible to handle large cargos, such as aero-generators (greater than 200 Tm) simply by rolling without the need for lifting equipment, and hence this type of vessel makes it possible to manufacture platforms at any wharf even without lifting equipment.
● It has been designed not to need tugs in mooring operations.
● Possibility of docking in shallow water ports without difficulty
● Due to its bollard pull capacity and the size of its deck it is perfectly suited to the installation and laying of underwater cable and pipes
● Its construction is highly economic as both its upper works and the feet and the hydraulic cylinders of the legs are based on mass-produced industrial products which are therefore economic and of guaranteed quality.
● Being removed from the impact of the waves and navigating in areas of calm its structure has to resist much less force than that of a conventional vessel, hence it is much simpler and more economic.
● The solution of reduction of viscous resistance by the breaking of the outer layer by an air-flow brings about a revolution in ship building as it makes it possible to achieve speeds with levels of consumption unthinkable up until now.

### Description of the diagrams

To complete this description and to facilitate a better understanding of the characteristics of the invention a set of diagrams is attached showing, merely as illustration and without being exhaustive, the following:
Diagram 1: Vessel sailing on the waves
Diagram 2: Vessel working with platform
Diagram 3: Vessel entering shallow water port
Diagram 4: Vessel moored at wharf level

The references used in the diagrams are listed below:
(1) Bridge, engine room and crew's quarters
(2) Deck and loading area (upper works)
(3) Pinion and rack
(4) Submersed displacement (lower works)
(5) Hydrodynamic profiles joining lower works
(6) Elevators
(7) Telescopic feet on the sea bed

### Detailed description of the invention

To obtain a better understanding of the invention this new vessel design is described below based on the diagrams.

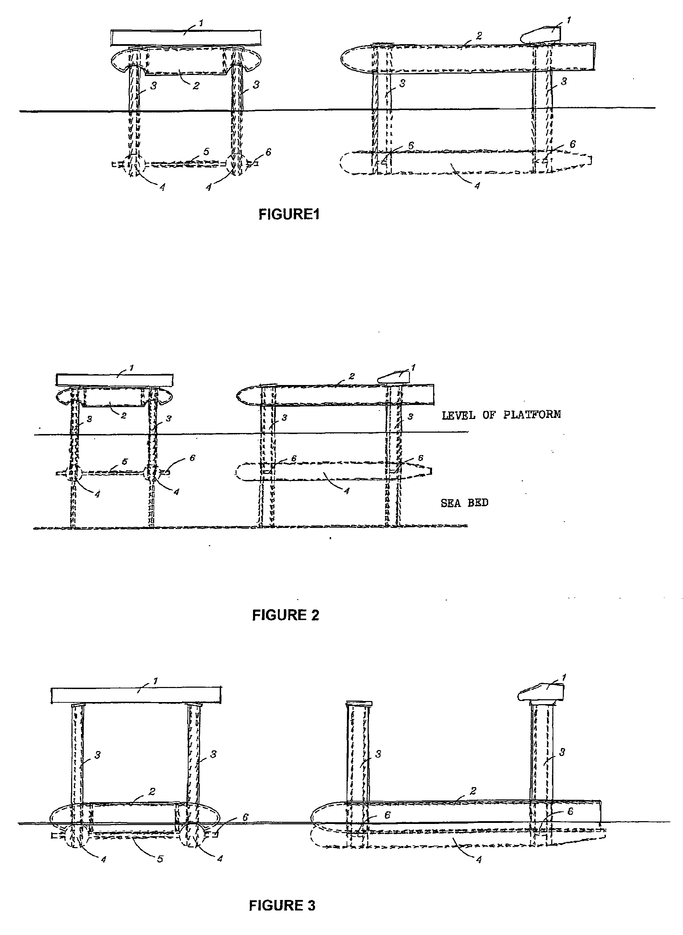

As seen in diagram 1, in a representation of the vessel navigating on the waves, it is made up of two parallel submerged bodies (4) clearly cylindrical in cross-section or as hydro-dynamic as possible, joined by way of hydro-dynamic profiles (5).

At the joining of the cylinders (4) and the profiles (5) there are four legs (3) of hydrodynamic cross-section able to support a platform or loading area (2) which can be moved (up or down) on the legs (3) by way of a rack, until raised above the level of the waves.

Although not shown, all of the submerged displacement bodies (4) and the hydrodynamic joining profiles (5) can be completely covered with a textile of permeable sheets of porosity less than the size of a molecule of water and greater than that of a molecule of air and air pumped into the interior. The air molecules injected escape via the pores breaking outer layer and separating the water molecules from the submerged area so as to reduce viscous friction to a significant degree.

In cases of reverse tractor propulsion only elevators are necessary.

Diagram 2 shows the vessel at work at which point it has to be fixed to the sea bed. For this the hydraulic pistons included in the legs and the platforms to which they are joined (3) rest on the sea bed.

The upper works (2) (or non-submerged part of the vessel) have pinions which can move them raising them on the legs (3) which have a rack to the height necessary for it to sail at the level of the sea or to position it at the level of the wharf or the production platform.

The engine room, motors, the bridge and the crew area are located above the upper works (2). The geometry of the upper works (2) will be adapted to each particular case.

Diagram 3 shows the vessel at the entrance to a shallow water port, the lower works (4) are raised to the level of the sea, emptying the ballast tanks, and the upper works (2) with the action of the rack and pinions until at a tangent with the lower works providing flotation and reducing draft.

If operations require the vessel to be stable and independent of the movements of the sea this can be achieved thanks to the submerged area of the legs (3) being made of telescopic cylinders which can be extended or withdrawn as desired, and rested on the sea bed.

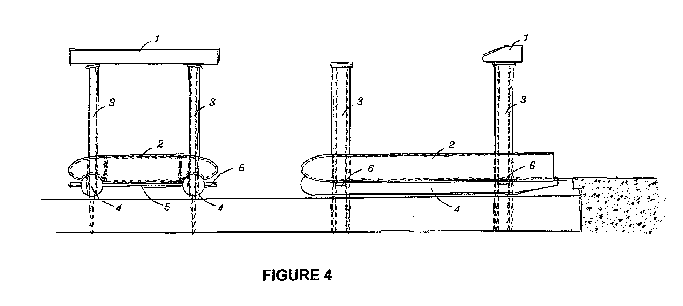

Diagram 4 shows how the vessel can dock at the level of a wharf in such a way that neither cranes nor lowering platforms are needed to take the cargo from the hold as, both in the case of bulk cargo in the cylinders (4) and the case of heavy elements transported on the platform of the upper works (2) in both cases they can be raised or lowered as desired and to the level desired, leaving them at the level of the wharf.

## Claims

1. New design of vessel with submersible hulls which sails at high speed transporting heavy cargo **characterised by the fact** that both lower works and upper works are displaced vertically in such a way that the lower works can move between the level of the sea and a height above the level of the waves, this avoiding friction and the creation of waves and the upper works are submerged beneath the water in normal sailing and working conditions and are raised to the surface of the sea in shallow waters or for loading and unloading operations.

2. New design of vessel with submersible hulls as in claim 1 **characterised by the fact that** the lower works include two parallel bodies of submerged displacement (4) joined by hydro-dynamic profiles (5) and supported by legs (3) which in their submerged area are made up of telescopic cylinders which expand or retract as desired and which submerge or raise the lower works.

3. New design of vessel with submersible hulls as in claim 2 **characterised by the fact that** the cylinders are joined to tangential plates external to the cylinders to support the pistons on the sea bed.

4. New design of vessel with submersible hulls as in claim 1 **characterised by the fact that** the system of vertical displacement is of rack and pinion type.

5. New design of vessel with submersible hulls as in claim 2 **characterised by the fact that** the parallel bodies of submerged displacement (4) joined to the hydrodynamic profiles (5) are completely covered with a textile of permeable sheets of porosity less than the size of a molecule of water and greater than that of a molecule of air and air is pumped into the interior which escapes via the pores breaking the outer layer and separating the water molecules from the submerged area so as to reduce viscous friction to a significant degree.

6. New design of vessel with submersible hulls as in claim 1 **characterised by the fact that** the engine room, motors, the bridge and the crew area are located above the upper works (2).

7. New design of vessel with submersible hulls as in claim 2 **characterised by the fact that** the two parallel bodies of submerged displacement (4) serve as a deposit for bulk cargos.

8. New design of vessel with submersible hulls as in claim 1 **characterised by the fact that** propulsion is reverse tractor type and has elevators (6).

## Amended claims

### Amended claims under Art. 19.1 PCT

**1.** Vessel with submersible hulls which sails at high speed transporting heavy cargo **characterised by the fact that** the lower works (4) comprise two parallel bodies of submerged displacement (4) joined by hydro-dynamic profiles (5) and supported by legs (3) which in their submerged area are made up of telescopic cylinders joined to tangential plates outside the cylinders for deep support of the pistons, which expand or retract as desired and which submerge or raise the lower works in a way such they are submerged beneath the water in normal sailing and working conditions and are raised to the surface of the sea in shallow waters or for loading and unloading operations; and wherein the upper works (2) can move between the level of the sea and a height above the level of the waves for having pinions which can move it above the legs (3) which are fitted with a rack and wherein the two parallel bodies of submerged displacement (4) serve as a deposit for bulk cargos.

**2.** Vessel with submersible hulls as in claim 2 **characterised by the fact that** the parallel bodies of submerged displacement (4) joined to the hydrodynamic profiles (5) are completely covered with a textile of permeable sheets of porosity less than the size of a molecule of water and greater than that of a molecule of air and air is pumped into the interior which escapes via the pores breaking the outer layer and separating the water molecules from the submerged area so as to reduce viscous friction to a significant degree.

**3.** Vessel with submersible hulls as in claim 1 **characterised by the fact that** the engine room, motors, the bridge and the crew (1) area are located above the upper works (2).

**4.** Vessel with submersible hulls as in claim 1 **characterised by the fact that** propulsion is reverse tractor type and has elevators (6).

Statement under Art. 19.1 PCT
The new set of claims that has been filed includes the following amendments in respect of the original application:
**1.** modified; claims 2, 3, 4 and 7 removed; claims 5, 6 and 8 modified.
   (i) Basis for the amendment: Claim 1 has been amended in its preamble in order to start as the title of the invention, erasing the wording *"New design of"* which results redundant and unnecessary. Claim 1 has also been amended in its characterizing part by adding technical characteristic of the "lower works" and the "upper works". The basis for this amendment is in the originally-filed claims 2, 3, 4 and 7.
   (ii) Basis for the amendment: Claims 5, 6 and 8 have been amended in their preamble in order to start by the title of the invention, removing the wording "New *design* of" which is redundant and unnecessary.
